(19) Europäisches Patentamt / European Patent Office / Office européen des brevets

(11) **EP 4 613 617 A1**

(12) **EUROPEAN PATENT APPLICATION**

(43) Date of publication:
**10.09.2025 Bulletin 2025/37**

(21) Application number: 25159698.7

(22) Date of filing: **24.02.2025**

(51) International Patent Classification (IPC):
**B62J 45/20** (2020.01)

(52) Cooperative Patent Classification (CPC):
**B62J 45/20; A43B 3/44; A43B 5/14; B62J 50/20; G01S 19/19;** B62J 45/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.03.2024 TW 113108010**

(71) Applicant: **Decentralized Biotechnology Intelligence Co., Ltd.**
**Taipei 106021 (TW)**

(72) Inventors:
• **Chou, Yao-Sheng**
**106021 Taipei City (TW)**
• **Jiang, Lin-Yi**
**106021 Taipei City (TW)**
• **Lin, Hsiao-Yi**
**106021 Taipei City (TW)**

(74) Representative: **Lermer, Christoph**
**Nove Haus - Design Offices**
**Luise-Ullrich-Straße 14**
**80636 München (DE)**

(54) **CYCLING POWER AND STATUS MEASUREMENT APPARATUS OF RIDING DEVICE AND RELATED CLOUD-BASED SYSTEM**

(57)     The present invention proposes a cycling power and status measurement apparatus of a riding device, which includes a sensor assembly disposed on the user's foot, it includes a pressure sensing device and an inertial sensing module configured to collect the user's motion-related data when cycling, a electronic computing device communicatively coupled to the sensor assembly to receive the motion-related data and calculate cycling power according to the motion-related data through executing an algorithm when the user performs the cycling.

FIG. 1

**Description**

TECHNICAL FIELD

The present invention relates to technical filed of cycling power measurement, in particular to a cycling power and status measurement apparatus of riding device and related cloud system.

BACKGROUND

Cycling is one of the most common and popular sports. With the development of bicycle riding, there are more and more professional bicycle riding sports on roads. In order to measure the pressure of bicycle pedals, it is required to dispose a pressure measuring device on the pedals of the bicycle used to measure the pressure of bicycle pedals. Ultimately the athlete's, e.g., cyclist's force characteristics can be measured to optimize the cyclist's force exerting mode.
During riding, cyclists perform alternating pedaling movements with their legs on the bicycle, which generate alternating rotational movements about an axis of the two cranks operated by the pedals.
It is necessary to provide cyclists with useful power during the pedaling process of the bicycle to better manage their training effects. This information can be used to better manage the assistance of bicycle's pedaling, to monitor changes in the rider's training effectiveness, or to calculate the rider's total riding power.
A metric used by cyclists to measure their cycling performance includes measuring cycling power in the time spent for an independently given route. Cycling power is a measurement of the power applied to the bicycle by the cyclist, which is a measure of the force for a rider exerting on the pedals and crank of a bicycle on the rotating portion of the pedals over a time interval. Cycling power is a measure that is independent of road conditions, weather conditions and altitude changes, and is therefore a useful statistics of merit training and comparison for both amateur and professional riders.
Because cycling power is a measurement of the force applied to the pedals and cranks, power is conventionally measured at the pedals or at the cranks.
A bicycle power meter is an instrument that measures the cycling power output (in watts) of a cyclist. As a training aid, this type of power meter can provide the rider with feedback about his/her exercise amount. If the power is lower than a certain value, the rider can increase the power by pedaling faster or shifting to a higher gear. The power is usually displayed on the main control unit installed on the handlebar of the bicycle. The power meter is a device that calculates and displays power. There shall be a wireless connection between the power meter and the device that calculates and displays power.
However, due to the aforementioned measurement methods, most measurement apparatus of cycling power currently available must collect data from the base plate, pedals, hubs, etc. to calculate the power. The installation of these instruments is somewhat difficult and often additional tools are required to disassemble the large plate or pedal to perform measurement, which can be very inconvenient for the user.

SUMMARY OF THE INVENTION

In order to improve the above deficiencies, according to one aspect of the present invention, a device for measuring the riding power and status of a riding device is proposed, which includes a sensor assembly disposed on the user's footwear, it includes a pressure sensing device and an inertial sensing module configured to collect motion-related data of a riding device with pedals in response to exerted force on the pedals when the riding device is being cycling, and an electronic computing device communicatively coupled to the sensor assembly to receive the motion-related data and to calculate cycling power according to the motion-related data through executing an algorithm.
In one preferred embodiment, the riding device with pedals includes a bicycle. The cycling includes performing an alternating pedaling motion on the pedals, and each footwear is in contact with corresponding one of the pedals to maintain consistent motion. The pressure sensing device includes a plurality of pressure sensors for sensing force exerted on corresponding one of the pedals by the footwear, and the inertial sensing module includes accelerometer, gyroscope, GPS sensor or their combinations. The sensor assembly further comprises a microprocessor configured to collect and analyze signals detected by the pressure sensing device, the inertial sensing module and the GPS sensor, and configured to convert the signals into corresponding pressure data, acceleration data and GPS data related to interactions between the footwear and the corresponding one of the pedals, a memory coupled to the microprocessor, configured to store the pressure data, acceleration data and GPS data, and a wireless transceiver coupled to the microprocessor, configured to wirelessly transmit the pressure data, the acceleration data and the GPS data to an external coupled electronic device.
In one preferred embodiment, the wireless transceiver includes Bluetooth, WiFi, Zigbee, narrow channel IoT or ANT+ wireless data transmission/receiving device. The GPS data sensed by the GPS sensor provides cycling distance.
In one preferred embodiment, the motion-related data comprises force exerted on the pedals by the footwear determined by collective readings of each of the plurality of pressure sensors in the pressure sensing device, and cycling cadence, speed and angle of each footwear determined by collected readings of the inertial sensing module.

According to another aspect of the present invention, a cloud system for cycling power and status of a riding device is provided, which comprises a sensor assembly disposed on each footwear of a user, including a pressure sensing device and an inertial sensing module, configured to collect motion-related data of a riding device with pedals in response to exerted force on the pedals when the riding device is being cycling, and an electronic computing device communicatively coupled to the sensor assembly, configured to receive the motion-related data and to calculate cycling power according to the motion-related data through executing an algorithm, and a cloud server communicatively coupled to the electronic computing device, configured to receive the motion-related data and the cycling power uploaded buy the electronic computing device. The motion-related data and the cycling power are shared with third-party connected fitness applications through the cloud server.

BRIEF DESCRIPTION OF THE DRAWINGS

The components, characteristics and advantages of the present invention may be understood by the detailed descriptions of the preferred embodiments outlined in the specification and the drawings attached:

FIG. 1 shows the system architecture of a device for measuring the cycling power and status of a riding device.

FIG. 2 shows a schematic diagram of the distribution of pressure sensors and their wiring according to the present invention.

FIG. 3 shows a functional block diagram of a sensor assembly according to an embodiment of the present invention.

FIG. 4 shows a system block diagram illustrating communication between a sensor module and an externally coupled electronic computing device.

FIG. 5 shows a diagram that the path of a bicycle pedal can travel.

FIG. 6 shows an exemplary time variation of the force signal exerted on the bicycle pedal by the user's foot received from the pressure sensing device.

FIG. 7 shows an exemplary of the z-component of the acceleration signal received from the inertial sensing module.

DETAILED DESCRIPTION

Some preferred embodiments of the present invention will now be described in greater detail. However, it should be recognized that the preferred embodiments of the present invention are provided for illustration rather than limiting the present invention. In addition, the present invention can be practiced in a wide range of other embodiments besides those explicitly described, and the scope of the present invention is not expressly limited except as specified in the accompanying claims.

The present invention proposes a device for measuring the cycling power and status of a riding device, especially for measuring the power consumption of a cyclist during cycling, which can provide feedback information about the amount of exercise to the cyclist to evaluate training effectiveness.

Determining the user's cycling power can provide important sport/movement and activity data about the cyclist. Knowledge about cycling power may be of great use for a variety of cycling-related applications, such as athletic training, vocational training, and recreational cycling.

For example, an athlete riding a bicycle uphill may wish to ride the bicycle at a speed that maintains the same riding power as riding a bicycle on level ground. If the user cycles uphill at a speed that exceeds his/her flat ground cycling power, the user may feel tired more quickly and may not be able to perform at his/her maximum capacity for the same period of time.

Feedback of the user's cycling power may allow the users to optimize their training effect for obtaining better training results. For example, the cycling power provides users (cyclists) with an instant quantification of work efficiency, which can be used for specific training techniques such as interval training.

Cycling power that feedback to users can also be integrated into and shared to third-party connected fitness applications through a cloud system, such as a cloud server, to allow users to interact/engage with these systems.

The system and apparatus of the present invention can use multiple sensors located on the user's underfoot (such as footwear) to determine mechanical cycling power of the user. Such system and apparatus may use sensors attached to or provided within wearable devices or cycling equipment to measure and monitor data related to movements or activities of the user while cycling. The measured data from the sensors can be used to calculate mechanical cycling power and obtain the riding status of the user.

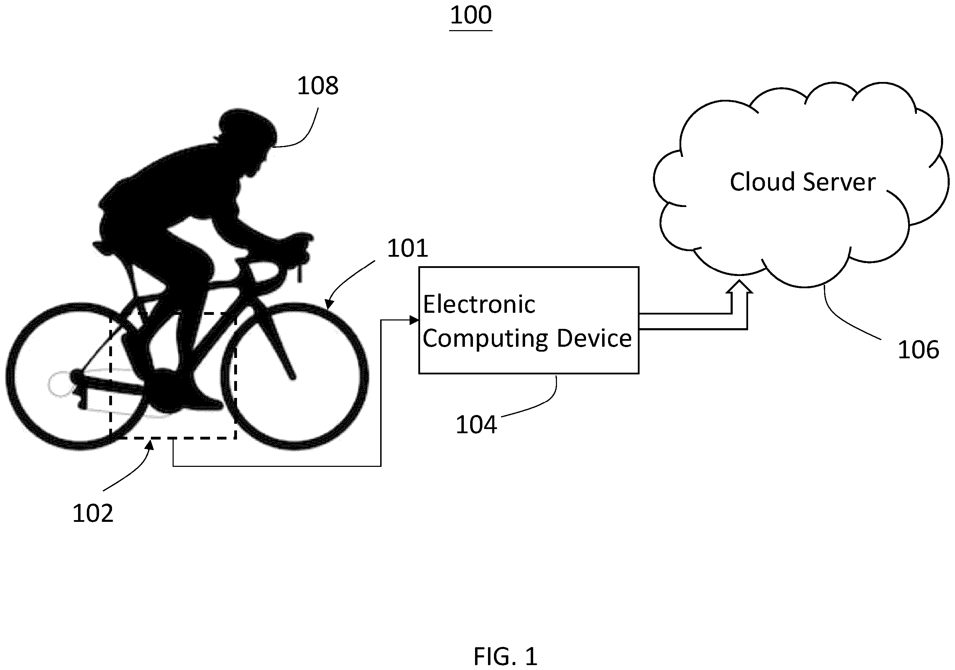

Based on the aforementioned concept, refer to FIG. 1, which shows a system architecture 100 of an apparatus for measuring the cycling power and status of the riding device 101, which includes a sensor assembly 102, an electronic computing device 104 and a cloud server 106. The sensor assembly 102 is communicatively connected to the electronic computing device 104 where the electronic computing device 104 can receive data collected by the sensor assembly 102. The electronic computing device 104 can communicatively connect to the cloud server 106 through the internet used to upload the motion-related data and the cycling power of the user to the cloud server 106 while performing cycling exercises. As will be discussed in greater detail below, the sensor assembly 102 may be provided within (or attached to) footwear worn by the user 108, such as the shoe or insole of user 108, which includes a plurality of pressure sensors and inertial sensor module (including radio transceiver). According to some embodiments of the present invention, the plurality of pressure sensors and inertial sensor module (including wireless transceiver) may be separated or integrated together.

According to an embodiment of the present invention, the sensor assembly 102 can be worn on both feet of the user. The signals generated by the sensor assembly 102 and transmitted by the wireless transceiver, including the aforementioned data related to the force exerted by each foot of the user 108 on the bicycle pedal and the motion of the crank, can be received by a wireless transceiver (not shown) of an externally coupled electronic computing device 104, which comprises a computing device such as a smartphone, laptop, tablet, or personal computer.

According to an embodiment of the present invention, the sensor assembly 102 may include a plurality of pressure sensors, which may be configured to collect force data from the user's feet (or footwears), such as the force of the user's feet (or footwears) exerted on the bicycle pedals.

According to an embodiment of the present invention, the sensor assembly 102 further includes an inertial sensing module, having one or more sensors that can be used to measure the position and/or movement of the user's feet (or footwears). For example, the inertial sensing module may include a gyroscope, an accelerometer (e.g., a three-axis accelerometer), a magnetometer, an orientation sensor (for measuring orientation and/or changes in orientation), an angular velocity sensor, or a tilt sensor.

According to an embodiment of the present invention, the aforementioned motion-related data related to the cycling of the user 108, such as data related to the force of the user's feet (or footwears) exerted on the pedals of the bicycle, speed and acceleration of the user's feet, i.e., user's foot speed and foot acceleration, which can be obtained by the electronic computing device 104 through the wireless transmission to estimate the user's cycling power, and then uploaded to the cloud server 106 via the internet for subsequent training and evaluation. The system architecture 100 also includes an application program (App) installed on the electronic computing device 104. The application program includes transmitting and receiving data between the sensor assembly 102, the electronic computing device 104, such as a mobile device e.g., a smartphone or a tablet computer, and the cloud server 106. The application program can be based on Android, Windows or iOS platforms, and it can also upload signals to the cloud server 106 for storage and/or performing data processing. The system architecture 100 can be configured to continuously collect data related to the cycling movement of the user 108 and perform executable programs through the electronic computing device 104 to calculate cycling power. The executable programs or algorithms can be used to estimate the cycling power/energy consumption based on the received data related to the user's cycling movement, i.e., motion-related data of the user.

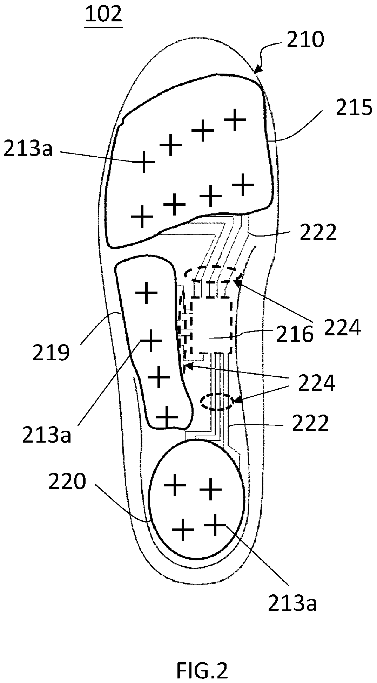

To describe the sensor assembly 102 in detail, as shown in FIG. 2, which includes a plurality of pressure sensors and an inertial sensing module, and can be separately disposed on the soles of the user's 108 feet. Among them, multiple pressure sensors and an inertial sensing module can be integrated together or separately disposed. For convenience of explanation, FIG. 2 only shows an example in which a plurality of pressure sensors and the inertial sensing module are integrated in the sensor assembly 102, such as integrated into the insole 210. Other embodiments of the sensor assembly 102 may be used without departing from the spirit of the present invention. For examples, the sensor assembly can be integrated into shoes, insoles or shoe soles, which also fall within the scope of protection of the present invention. Referring to FIG. 2, a plurality of pressure sensors 213a can be disposed in the near toe area 215, the lateral arch area 219 and the heel area 220 of the insole. The near toe area 215 corresponds to the toe area and the forefoot area. Each area has a plurality of pressure sensors 213a, and individual pressure sensor is electrically connected to the inertial sensing module 216 respectively using wires 222. In one embodiment, each of the pressure sensor 213a can be a capacitive pressure sensor, where a different number of capacitive pressure sensors and corresponding wiring 224 are configured to form a flexible pressure sensing device, which is disposed on the insole 210. Different parts of the plurality of pressure sensors 213a are used together to sense the foot pressure distribution in different areas of the user's foot (for example, the aforementioned near toe area 215, lateral arch area 219 and heel area 220). According to alternative embodiments, the pressure sensors may also be resistive pressure sensors. The inertial sensing module 216, including Bluetooth chip and other electronic components (e.g., inertial measurement units, GPS sensor, power supply unit), is all embedded into the arch support 214 of the insole 210. In one embodiment, the inertial sensing module 216 may be an electronic sensing module integrated by a printed circuit board, which has a connection terminal electrically connected with the plurality of pressure sensors. The size of the inertial sensing module 216 can be miniaturized, and its thickness is about 3-4.5 mm (millimeters).

According to an embodiment of the present invention, the sensor assembly 102 can provide user's relevant data/information while riding a bicycle. In some embodiments, the inertial sensing module 216 of the sensor assembly 102 may include (1) a wearable wireless real-time motion sensing device or an IMU (inertial measurement unit), (2) a wearable wireless real-time combination multiple zone foot plantar pressure/6-dimensional motion capture (IMU) device.

According to the embodiment of the present invention, the inertial sensing module 216 at least includes an accelerometer, a gyroscope, a GPS sensor etc. Among them, both accelerometer and gyroscope are sensors that are manufactured based on Micro-Electro-Mechanical Systems (MEMS) technology, where he accelerometer and the gyroscope can be integrated to form a composite sensor including six-axis accelerometer and gyroscope with six degrees of freedom.

Accordingly, the exemplary sensor assembly 102 may be a combined multizone plantar pressure/6-degrees of freedom motion capture device. Sensor assembly 102 records the user's foot force data (through a plurality of pressure sensors) and six degrees of freedom motion data (through the inertial sensing module). 216) while the user is riding a bicycle.

The sensor assembly 102 may include an inertial sensing module 216, which serves as a six-dimensional motion detection device (or called six-axis inertial measurement device), which is based on a six-degree-of-freedom Micro-Electro-Mechanical Systems (MEMS) sensor used to detect movement changes of the user, such as the user's foot force data and linear acceleration, angular velocity and other motion-related data.

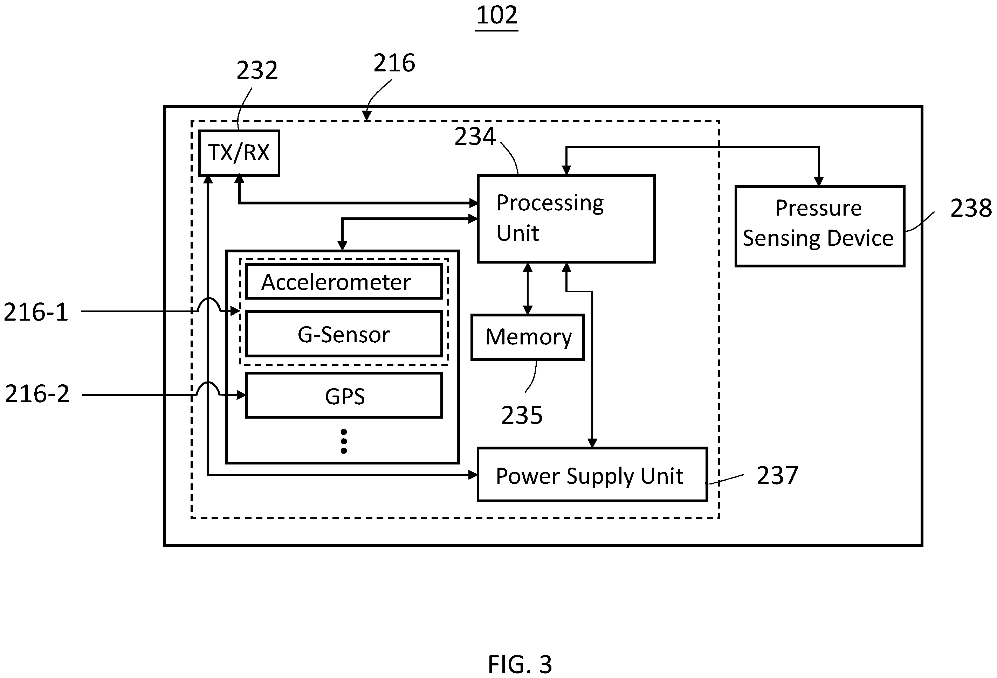

FIG. 3 shows a functional block diagram of the sensor assembly 102, which includes an inertial sensing module 216 capable of data transmitting/receiving through a wireless transceiver (TX/RX) 232. In FIG. 3, it shows that the wireless transceiver 232 is integrated with the inertial sensing module 216, those skilled in the art can understand that the wireless transceiver (TX/RX) 232 can also be a separate component for the purpose of data transmission/receiving. In the example shown in FIG. 3, the inertial sensing module 216 includes a wireless transceiver (TX/RX) 232 for transmitting data to and/or receiving data from one or more remote systems. In one embodiment, the wireless transceiver (TX/RX) 232 may be a low-power, mid-to-long-distance networking device or a similar wireless data transmission/receiving device, such as a Bluetooth chip, WiFi (Wireless Fidelity) RF, Zigbee, narrow channel IoT (NB-IOT), or ANT+ (adaptive network technology). Among them, ANT+ is a universal transmission protocol for sports tracking devices. The inertial sensing module 216 can be electrically connected with a plurality of pressure sensors (pressure sensing device 238) arranged on the insole via a connection terminal. The inertial sensing module 216 also includes a processing unit 234 (such as, one or more microprocessors), a memory 235, a composite sensor 216-1 (including an accelerometer, a gyroscope (G-sensor)), a GPS sensor 216-2 and power supply unit 237. The power supply unit 237 may supply power to the pressure sensing device 238, and/or other components of the sensor assembly 102, such as processing unit 234, memory 235, composite sensor 216-1 and GPS sensor 216-2. In a preferred embodiment, the power supply unit 237 includes a rechargeable solid-state battery, an inductive coil (for wirelessly charging the the battery by coupling with an external wireless charging system) and a USB charging interface. It should be understood that the sensor assembly 102 can provide computing programs and/or algorithms to collect and store relevant data while the user is riding a bicycle, for example the force data of the user's feet exerted on the bicycle pedals and cranks (through the pressure sensor), riding distance of the user (through GPS sensor), speed, acceleration, angular velocity related data and angular orientation changes (through the composite sensor), and these programs/algorithms can be stored and/or executed by the processing unit 234.

The wireless transceiver (TX/RX) 232 can completely connect to one or more sensors, and provide additional composite sensors 216-1, GPS sensors 216-2, etc. for detecting or providing data or information related to various parameters. These data or information include physiological data related to the user, which comprises the pressure data of the interaction between the user's feet and the corresponding bicycle pedal when riding a bicycle (obtained from the pressure sensor), the movement trajectory and acceleration of the user's feet, GPS data, angular velocity related data and change of angular orientation (sensing by the gyroscope sensor). These data can be stored in memory 235 or transmitted to remote computing electronics or servers via wireless transceiver (TX/RX) 232.

The inertial sensing module 216 may also be configured to communicate with an externally coupled electronic computing device 104, which may include, for example a smartphone, a laptop, a tablet, or a personal computer.

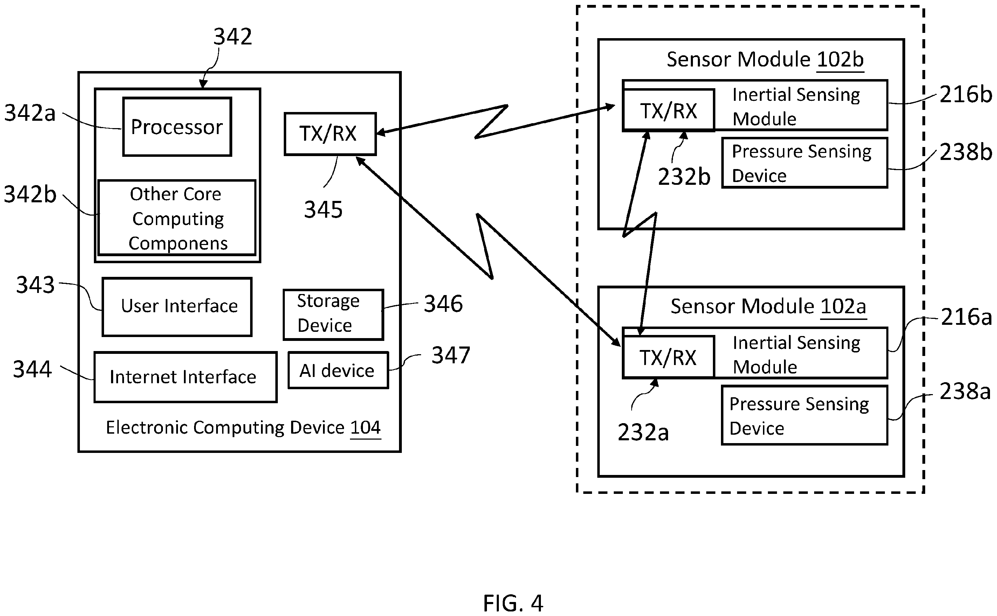

From a system perspective, as shown in FIG. 4, a single user 108 uses two sensor assemblies 102 of two feet, one for each foot, such as sensor modules (102a, 102b) provided on the left and right insoles respectively.

FIG. 4 shows a system block diagram illustrating communication between sensor modules (102a, 102b) and an externally coupled electronic computing device 104. The sensor modules (102a, 102b) disposed on user's feet (for example, left and right insole), each includes an inertial sensing module (216a or 216b) embedded in the arch of the corresponding insole, which is electrically connected with a pressure sensing device (238a or 238b) and configured to receive and analyze the force data exerted on the corresponding pedal of the bicycle by one of the user's feet, acceleration and angular velocity related data of the user's feet while riding a bicycle, and transmit these data to a remote computing device or a server through a wireless transceiver (TX/RX) (232a or 232b) located in the inertial sensing module (216a or 216b). Each of the sensing modules (16a, 16b) includes a processing unit (such as, one or more microprocessors), a memory, additional sensors, and a power supply unit (refer ring to FIG. 3).

The external electronic computing device 104 includes any electronic device that can transmit data, process data, and/or store data. In one embodiment, the electronic computing device 104 is a portable computing device. The portable computing device may be a social network device, a game device, a mobile phone, a smart phone, a personal digital assistant, a digital audio/video player, a notebook computer, a tablet computer, a video game controller, and/or any other portable device containing a computing core.

The external electronic computing device 104 includes a computing core 342, a user interface 343, an internet interface 344, a wireless communication transceiver 345, and a storage device 46. The user interface 343 includes one or more input devices (such as, keyboard, touch screen, voice input device, etc.), one or more audio output devices (such as, speaker, headphone jack, etc.), and/or one or more video output devices (such as, video graphics display, touch screen, etc.). The internet interface 344 includes one or more networking devices (such as, wireless local area network (WLAN) devices, wired LAN devices, wireless wide area network (WWAN) devices, etc.). The storage device 46 includes a flash memory device, one or more hard disk drives, one or more solid-state (SS) storage devices, and/or a cloud memory .

The computing core 342 includes a processor 342a and other computing core components 342b. Other computing core components 342b include a video graphics processing unit, a memory controller, a main memory (such as RAM), one or more input/output (I/O) device interface modules, input/output (I/O) interfaces, input/output (I/O) controllers, peripheral device interfaces, one or more USB interface modules, one or more network interface modules, one or more memory interface modules and/or one or more peripheral device interface modules.

The wireless transceiver 345 of the external electronic computing device 104 and the wireless transceiver (232a, 232b) of the sensor modules (102a, 102b) have similar transceiver types (such as, Bluetooth, WLAN, WiFi, etc.). The wireless transceiver (232a, 232b) of the sensor modules (102a, 102b) directly communicate with the wireless transceiver 345 of the electronic computing device 104 to share the collected data and/or receive instructions from the external computing device 40 through the corresponding sensor modules (102a, 102b). In addition, or as an alternative example, the wireless transceiver (232a, 232b) of the sensor modules (102a, 102b) communicate between one of them to collect data. The wireless transceiver 232a transmits the collective data to the wireless transceiver 345 of the external computing device 104.

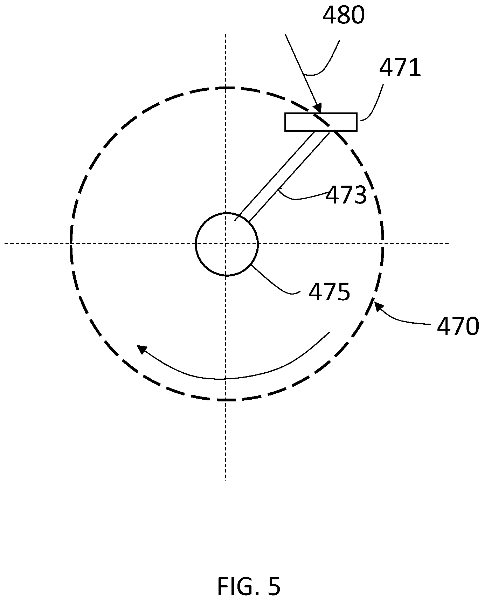

Referring to FIG. 5, which shows a schematic diagram of a path 470 that the pedal 471 of a bicycle can travel. The path 470 can be a circular path around the rotation axis 475 of the crank 473 of the bicycle, or can be an eccentric path around the rotation axis 475 of the crank 473 of the bicycle. While pedaling, the pedal 471 travels along a trajectory, i.e., the path 470. At any given time, an instantaneous crank angle has a value between 0 to 360 degrees. When the user's foot presses the pedal to the instantaneous pedaling force 480, which may cause the pedal to move along path 470. The magnitude and direction of the instantaneous pedaling force 480 against the pedal 471 at any location along path 470 may determine the speed and direction of pedal 471. To keep pedal 471 rotating in the same direction, the direction of the instantaneous pedaling force 480 may change along the path 470.

According to an embodiment of the present invention, the pedals 471 of the bicycle perform consistent movements with the user's feet/shoes while the user is cycling. For example, there is an engagement/fixing structure between individual cycling shoe and the bicycle pedal 471, which can avoid cycling shoe and pedal moving relative to each other.

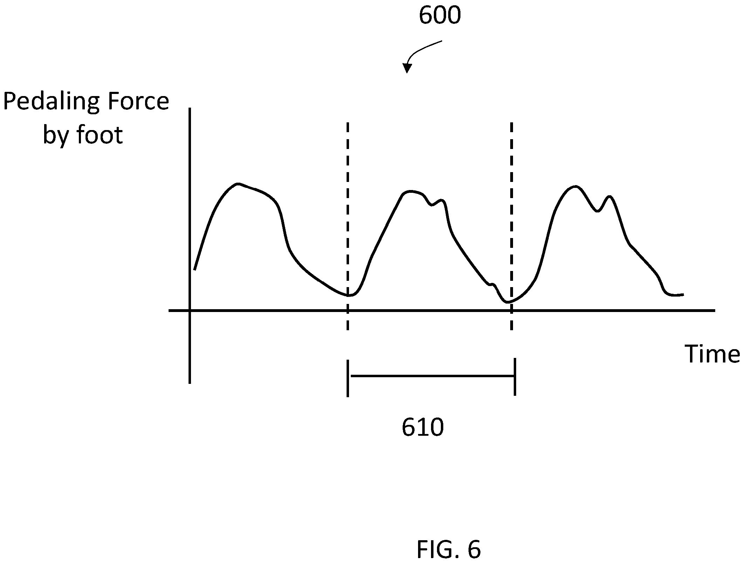

FIG. 6 shows an exemplary time variation of the force signal 600 exerted on the bicycle pedal by user's foot received from the pressure sensing device (for example, a plurality of pressure sensors 213a disposed in the near toe area 215 shown in FIG. 2). From the graph that showing force signal as a function of time, the revolution period 610 can be determined as the length of time (e.g., time difference) between two nearest minimum values of the force signal. In addition, since the plurality of pressure sensors 213a disposed on other areas of the insole, such as the heel area 220 or the lateral arch area 219, basically cannot measure significant changes of pressure signal during cycling of the user, therefore a threshold value of the pressure signal can be set to effectively filter the pressure signal except for the near toe area 215.

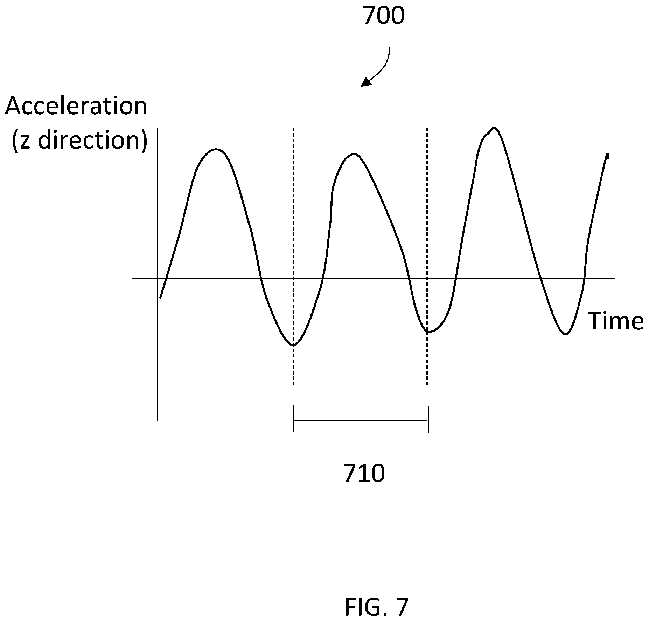

FIG. 7 shows an exemplary diagram 700 illustrating the z-component of the acceleration signal received from the inertial sensing module. The revolution period 710 may be determined as the length of time (e.g., time difference) between two nearest signal minima. According to an embodiment of the present invention, the revolution period ($T_{rev}$) 710 is directly related to the pedaling rhythm by calculating the reciprocal of the period of the z-component of the acceleration signal and multiplying it by $2\pi$, that is, ($2\pi/T_{rev}$), the angular velocity of the bicycle pedal can be estimated.

According to an embodiment of the present invention, the revolution period and the angular velocity of the pedal obtained from the force signal (FIG. 6) and the acceleration signal (FIG. 7) of pedaling can be compared with, for example, the data of angular velocity of the bicycle crank directly measured by the composite sensor for cross-validating with each other.

Cycling power is a measure of the force exerted by a rider on a bicycle's pedals and crank over a portion of the rotation of the pedals during an interval of time. Many existing methods can calculate cycling power using simple equations of motion, such as:

$$P = T \times \omega = F \times sin\theta \times r \times \omega \qquad\qquad (1)$$

$$P = \frac{W}{t} = \frac{F \times d}{t} = F \times v \qquad (2)$$

where P represents power, $W$ represents work, $T$ represents torque, $\omega$ represents angular velocity, F represents force applied to the pedals, $\theta$ represents foot angle (the angle of the foot relative to the horizontal axis of the bicycle, i.e., the axis extending along the forward-rearward direction of the bike), $r$ represents crank arm length, $d$ represents distance, $t$ represents time, and v represents velocity.

For example, the cycling power can be calculated through mathematical formula 1 or 2. The force F applied to the pedal can be determined through the values of each pressure sensor received by the plurality of pressure sensors; the cycling cadence, foot speed v and foot angle $\theta$ can be determined through the sensor readings of the inertial sensing module (gyroscope), where the angular velocity $\omega$ can be calculated by the cycling cadence.

In addition, the user's riding distance and trajectory can be provided through the data sensed by the GPS sensor.

In an alternative embodiment, in addition to all the above features, the following features are also disclosed. This embodiment expands aforementioned bicycle riding power measurement from the first half cycle power measurement to the entire riding cycle power measurement. The technical features of the above-mentioned embodiment may successfully realize the power measurement of the first half cycle (push phase). This embodiment further expands the power estimation to cover the second half cycle (pull phase), thereby providing more complete cycling power data.

The traditional method cannot directly measure the data in the second half circle. The present invention solves the problem, and the embodiment realizes the power measurement of the complete riding cycle. Based on the strict physical laws, the verified first half cycle data and the advanced AI technology in this embodiment, therefore, the reliability of the embodiment is excellent. In terms of application value, the present invention provides more complete cycling performance analysis, helps riders optimize training results, and enhances product competitiveness.

According to the law of conservation of energy, the total power of cycling can be expressed as:

$$P_{total} = P_{push} + P_{pull,}$$

wherein:

$Pt_{otal}$: total power of the complete cycling cycle;

$P_{push}$: first half cycle power (measured by the first embodiment);

$P_{pull}$: second half cycle power (measured by this embodiment)

In terms of environmental parameter stability, the drag coefficient (including air resistance and rolling resistance) can be regarded as a constant in a short period of time during the same riding cycle, environmental conditions (such as slope and road friction) remain relatively stable, and system parameters (such as bicycle mass and rider posture) change slightly.

The embodiment includes an AI device 347 connected to the computing core 342 to provide artificial intelligence applications so as to learn and establish a correlation model between the power of the first half cycle and the second half cycle, adapt to different riding conditions and environmental changes, and provide stable and reliable power estimation results. The method of the embodiment is implemented based on the following core principles: riding regularity: the pedaling action of the bicycle is highly regular, hence, there is a stable correlation between the first and the second half cycles; physical stability: within the same pedaling cycle, the environmental conditions (such as wind resistance, road conditions) and riding status are maintained; energy continuity: based on the principle of conservation of energy, the power conversion between the first half cycle and the second half cycle satisfy the laws of physics. Based on the above principles, the second half cycle power prediction principle is explained as follows:

The core of the prediction method of the embodiment is to employ the measured data of the first half cycle, combined with the physical characteristics of bicycle riding and environmental resistance analysis, to accurately estimate the power of the second half cycle. In the pedaling motion of the bicycle, the power data of the first half cycle (push phase) not only contains the force data of the rider, but also records the power characteristics required to overcome various resistances. By analyzing how the power in the first half cycle overcomes environmental factors, such as air resistance, rolling resistance and gravity, it is able to accurately determine the drag parameters.

Since these resistances are highly stable and predictable over a short period of time (approximately 0.5-1 seconds per pedaling cycle), they can be directly applied to the power estimation in the second half cycle. At the same time, the power outputs of the first half cycle and second half cycle are not independent, they are indeed closely related. This correlation is reflected in the continuity of the movement and the energy conversion process: when the rider completes the first half cycle of the pedaling movement, his muscle tissue, joint angles and pedal positions are all in already known states. If these data are combined with the calculated environmental resistance parameters, the movement characteristics and required power of the second half cycle are effectively predicted.

Since cycling is a continuous motion, the power conversion between the first half cycle and the second half cycle follow the laws of physics, sudden changes are not possible, thus, it provides predictions with reliable basis. By analyzing a large amount of riding data, the power ratio with stable patterns is observed during the first half cycle and second half cycle when the same rider overcomes the same resistance under similar conditions. The patterns are learned and predicted by the AI device 347, followed by combing with the real-time environmental parameters for dynamic adjustment, thereby achieving high-precision power prediction for the second half cycle.

The system uses sensor data of the bicycle (pressure sensor, IMU, GPS) as input source. After processing and analysis, it outputs complete cycling power data, including the measured power in the first half cycle and the predicted second half cycle power. By integrating data from multiple sensors, combining physical models and AI technology, an accurate estimate of the complete pedaling cycle power is achieved. The implementation process includes three main stages:

(1) Data collection for the first half cycle: the input data includes the pedaling force data from the pressure sensor, the angle and motion data from the IMU, the position and speed information from the GPS, and environmental sensor parameters. The output results include: calibrated pedaling force data, accurate pedaling angle information, and the complete set of environmental parameters.

(2) Data analysis and processing: the input data includes sensor data processed in the previous stage, historical riding records, and environmental condition information. The output results include: riding mode characteristics, environmental impact factors, and resistance parameter estimates.

(3) Second half cycle prediction: the input data includes: analyzed feature data, real-time environmental parameters, and physical model constraints. The output results include: power prediction value of the second half cycle, reliability assessment indicator, and complete power output curve.

This method ensures the reliability of the prediction results through multiple mechanisms: such as (1) physical constraints: ensuring that the prediction results comply with the law of energy conservation, maintain the continuity of the power curve, and comply with physiological limitations; (2) data verification: comparing with historical data, checking the rationality of the prediction results, and automatically correcting outliers; (3) real-time optimization: continuously updating the prediction model, adapting to different riding situations, and providing stable and reliable results.

This prediction method has unexpected effects and following advantages: the present invention provides complete cycling power data, and it estimates the power of the second half cycle without additional hardware, the present invention has self-learning and optimization capabilities, and it is suitable for various riding scenarios. The benefits of the present invention include: completely recording the power output of the entire pedaling cycle, providing more accurate riding data. In terms of sports science, it can help rider understand the complete pedaling pattern, optimize training plans, and provide unique and complete power measurement solutions on the market.

While various embodiments of the present invention have been described above, it should be understood that they have been presented by a way of example and not limitation. Numerous modifications and variations within the scope of the invention are possible. The present invention should only be defined in accordance with the following claims and their equivalents.

## Claims

1. A cycling power and status measurement apparatus of a riding device (101), comprising:

   a sensor assembly (102) disposed in each footwear of a user (108), which includes a pressure sensing device (238a, 238b) and an inertial sensing module (216a, 216b), configured to collect motion-related data of a riding device with pedals (471) in response to exerted force on said pedals (471) when said riding device (101) is being cycling; and
   an electronic computing device (104) communicatively coupled to said sensor assembly (102), configured to receive said motion-related data and to calculate cycling power according to said motion-related data through executing an algorithm.

2. The cycling power and status measurement apparatus of a riding device of claim 1, wherein parameters of a second half cycle are estimated based on a first half cycle to accurately estimate a complete pedaling cycle power, wherein said estimation includes a data collection of said first half cycle, a data analysis and processing, and a prediction of said second half cycle.

3. The cycling power and status measurement apparatus of a riding device of claim 2, wherein an AI device (347) provides an artificial intelligence to learn and establish a power correlation model between said first half cycle and said second half cycle, adapt to different riding conditions and environmental changes to provide stable and reliable power estimation results.

4. The apparatus of claim 1, wherein said riding device (101) with pedals (471) includes a bicycle.

5. The apparatus of claim 1, wherein said cycling includes performing an alternating pedaling motion on said pedals (471), and each said footwear is in contact with corresponding one of said pedals (471) to maintain consistent motion.

6. The apparatus of claim 5, wherein said pressure sensing device (238a, 238b) includes a plurality of pressure sensors for sensing force exerted on corresponding one of said pedals (471) by said footwear; wherein said inertial sensing module (216a, 216b) includes accelerometer, gyroscope (216-1), GPS sensor (216-2) or the combination thereof.

7. The apparatus of claim 6, said sensor assembly (102) further comprising:

a microprocessor (234) configured to collect and analyze signals detected by said pressure sensing device (238a, 238b), said inertial sensing module (216a, 216b) and said GPS sensor (216-2), and configured to convert said signals into corresponding pressure data, acceleration data and GPS data related to interactions between said footwear and said corresponding one of said pedals (471);
a memory (235) coupled to said microprocessor (234), configured to store said pressure data, acceleration data and GPS data; and
a wireless transceiver (232) coupled to the microprocessor, configured to wirelessly transmit said pressure data, said acceleration data and said GPS data to said electronic computing device (104).

8. The apparatus of claim 7, wherein said wireless transceiver (232) includes Bluetooth, WiFi, Zigbee, narrow channel IoT or ANT+ wireless data transmission/receiving device.

9. The apparatus of claim 7, wherein said GPS data sensed by said GPS sensor (216-2) provides cycling distance.

10. The apparatus of claim 1, wherein said motion-related data comprises:

force exerted on said pedals (471) by said footwear determined by collective readings of each of said plurality of pressure sensors (213a) in said pressure sensing device (238a, 238b);
cycling cadence, speed and angle of said each footwear determined by collected readings of said inertial sensing module (216a, 216b).

11. A cloud system (100) for cycling power and status of a riding device (101), comprising:

a sensor assembly (102) disposed on each footwear of a user (108), which includes a pressure sensing device (238a, 238b) and an inertial sensing module (216a, 216b), configured to collect motion-related data of said riding device (101) with pedals (471) in response to exerted force on said pedals (471) when said riding device (101) is being cycling;
an electronic computing device (104) communicatively coupled to said sensor assembly (102), configured to receive said motion-related data and to calculate cycling power according to said motion-related data through executing an algorithm;
a cloud server (106) communicatively coupled to said electronic computing device (104), configured to receive said motion-related data and said cycling power uploaded buy said electronic computing device (104);
wherein said motion-related data and said cycling power are shared with third-party connected fitness applications through said cloud server (106), wherein said motion-related data comprises: force exerted on said pedals (471) by said user (108) determined by collective readings of each of said plurality of pressure sensors (213a) in said pressure sensing device (238a, 238b); and cycling cadence, speed and angle of said each footwear of said user (108) determined by collected readings of said inertial sensing module (216a, 216b).

12. The cloud system for cycling power and status of a riding device of claim 11, wherein parameters of a second half cycle are estimated based on a first half cycle to accurately estimate a complete pedaling cycle power, wherein said estimation includes a data collection of said first half cycle, a data analysis and processing, and a prediction of said second half cycle.

13. The cycling power and status measurement apparatus of a riding device of claim 12, wherein an AI device (347) provides an artificial intelligence to learn and establish a power correlation model between said first half cycle and said second half cycle, adapt to different riding conditions and environmental changes to provide stable and reliable power estimation results.

14. The cloud system of claim 11, wherein said plurality of pressure sensors (213a) are used for sensing force exerted on corresponding one of said pedals (471) by said footwear; wherein said inertial sensing module (216a, 216b) includes accelerometer, gyroscope (216-1), GPS sensor (216-2) or the combination thereof.

15. The cloud system of claim 14, wherein a wireless transceiver (232) configured to wirelessly transmit said pressure data, an acceleration data and a GPS data.

FIG. 1

FIG.2

FIG. 3

EP 4 613 617 A1

FIG. 4

EP 4 613 617 A1

FIG. 5

600

Pedaling Force by foot

Time

610

FIG. 6

Acceleration
(z direction)

700

Time

710

FIG. 7

EP 4 613 617 A1

**EP 4 613 617 A1**

EUROPEAN SEARCH REPORT

Application Number

EP 25 15 9698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/124355 A1 (AOKI TOSHIAKI [JP] ET AL) 20 April 2023 (2023-04-20) | 1 | INV. B62J45/20 |
| Y | * paragraph [0066] - paragraph [0068]; figure 1 * | 2-15 | |
| Y | Luder Victor ET AL: "CycloWatt: An Affordable, TinyML-enhanced IoT Device Revolutionizing Cycling Power Metrics", IEEE International Instrumentation and Measurement Technology Conference, 27 February 2024 (2024-02-27), pages 1-6, XP093286125, Retrieved from the Internet: URL:https://arxiv.org/pdf/2403.07915 | 2-15 | |
| A | * page 2 - page 4 * | 1 | |
| A | US 2022/274663 A1 (WASS JUSTIN L [US]) 1 September 2022 (2022-09-01) * page 4 - page 5; figures 1-7 * | 1-15 | |
| A | US 8 364 389 B2 (APPLE INC [US]; DOROGUSKER JESSE L [US] ET AL.) 29 January 2013 (2013-01-29) * the whole document * | 1 | **TECHNICAL FIELDS SEARCHED (IPC)** B62J A43B G01S |

The present search report has been drawn up for all claims

| Place of search | Date of completion of the search | Examiner |
|---|---|---|
| The Hague | 12 June 2025 | Verdelho, Luís |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

**EP 4 613 617 A1**

## ANNEX TO THE EUROPEAN SEARCH REPORT
## ON EUROPEAN PATENT APPLICATION NO.

EP 25 15 9698

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2025

| Patent document cited in search report | Publication date | Patent family member(s) | Publication date |
|---|---|---|---|
| US 2023124355 A1 | 20-04-2023 | DE 102022208500 A1<br>US 11618530 B1 | 20-04-2023<br>04-04-2023 |
| US 2022274663 A1 | 01-09-2022 | NONE | |
| US 8364389 B2 | 29-01-2013 | US 2010198453 A1<br>US 2013144464 A1 | 05-08-2010<br>06-06-2013 |

EPO FORM P0459

For more details about this annex : see Official Journal of the European Patent Office, No. 12/82

19